# EUROPEAN PATENT SPECIFICATION

(11) **EP 4 195 051 B1**
(45) Date of publication and mention of the grant of the patent: **31.01.2024**
(21) Application number: 21217488.2
(22) Date of filing: 23.12.2021
(51) Int. Cl.: G06F 11/14, G06F 11/36

(54) **ERROR DETECTION AND CORRECTION DEVICE AND METHOD THEREOF TECHNICAL FIELD**
VORRICHTUNG UND VERFAHREN ZUR FEHLERERKENNUNG UND -KORREKTUR
DISPOSITIF ET PROCÉDÉ DE DÉTECTION ET DE CORRECTION D'ERREURS ET SON DOMAINE TECHNIQUE

(30) Priority: 07.12.2021 TW 110145674
(43) Date of publication of application: 14.06.2023
(73) Proprietor: Industrial Technology Research Institute, 310401 Hsinchu (TW)
(72) Inventor: SU, Hui-Kai, 622 Chiayi County (TW); YANG, Ming-Ta, 300 Hsinchu City (TW)
(74) Representative: dompatent von Kreisler Selting Werner - Partnerschaft von Patent- und Rechtsanwälten mbB

(56) References cited:
- EP-A1- 3 367 242
- WO-A1-2020/021415
- GB-A- 2 293 469

## Description

### TECHNICAL FIELD

The disclosure relates to an error detection device and an error detection method, and more particularly relates to a device for detecting and/or correcting erroneous execution of the operation program and a method thereof.

### BACKGROUND

Due to the environmental factors, the memory or register of a system platform may be interfered with or even may be damaged, and the numeric content stored in the memory or register may be changed which leads to erroneous operation result of the operation program executed on the system platform. In the space outside the atmosphere, environmental factors such as particle collision or electromagnetic interference are even worse and may easily result in single-event upset (SEU). For example, single particle in the outer space may collide with a satellite equipment operating in the outer space and change the state of the memory or register of the satellite equipment and reverse the bit data stored in the memory or register, causing execution error to the operation program of the satellite equipment and generating an erroneous operation result. Even more, the operation program may crash, and the overall task may fail.

For of the operation of the satellite equipment, due to the factors of cost, environment and distance, if errors occur to the software operation program, it is difficult to re-start the satellite equipment or re-execute the system to correct the errors of the operation program. Although the numeric errors caused by single-event upset may be resolved by upgrading hardware specification of the equipment, the cost for upgrading the specification of satellite equipment is extremely high.

Therefore, skilled ones in related industries of this technical field are devoted to resolve, using software algorithm, the technical problems caused by numeric errors arising from single-event upset among the environmental factors.

EP 3 367 242 discloses a method of hardware (HW) error detection in a microcontroller unit (MCU).

WO 2020/021415 discloses a modular electronic system for verifying the correct execution of operations executed by said electronic.

GB 2 293 469 discloses a digital arithmetic circuit including an inverting circuit and a digital circuit in which errors are to be detected.

### SUMMARY

According to one aspect of the invention, an error detection and correction device for detecting and/or correcting error(s) of an operation program according to claim 1 is provided.

According to another aspect of the invention, an error detection and correction method for detecting and/or correcting error(s) of an operation program according to claim 10 is provided.

The above and other aspects of the invention will become better understood with regard to the following detailed description of the preferred but non-limiting embodiment (s). The following description is made with reference to the accompanying drawings.

### BRIEF DESCRIPTION OF THE DRAWINGS

FIG. 1 is a block diagram of an error detection and correction device according to an embodiment of the disclosure.
FIG. 2 is a schematic diagram of an error detection and correction device operating on a system platform according to an embodiment of the disclosure.
FIG. 3A is a flowchart of an error detection and correction method according to an embodiment of the disclosure.
FIG. 3B is a flowchart of an error detection and correction method according to another embodiment of the disclosure.
FIGS. 4A and 4B are detailed flowcharts of an error detection and correction method for detecting and/or detecting errors according to the comparison result of the operation program and the two's complement inverse operation program and the checksum result according to an embodiment of the disclosure.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

Technical terms are used in the specification with reference to the prior art used in the technology field. For any terms described or defined in the specification, the descriptions and definitions in the specification shall prevail. Each embodiment of the present disclosure has one or more technical features. Given that each embodiment is implementable, a person ordinarily skilled in the art may selectively implement or combine some or all technical features of any embodiment of the present disclosure.

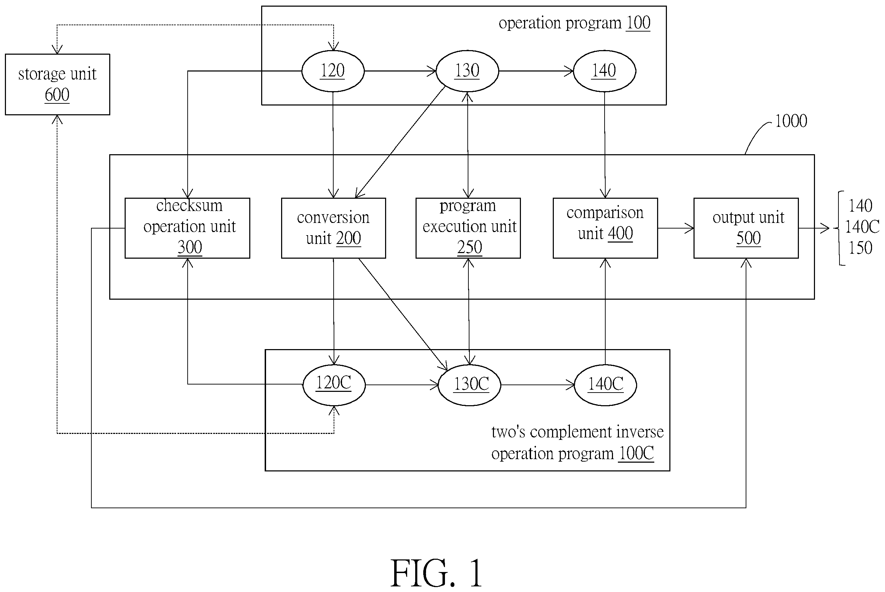

FIG. 1 is a block diagram of an error detection and correction device 1000 according to an embodiment of the disclosure. Referring to FIG. 1. The error detection and correction device 1000 is used to execute an operation program 100. Furthermore, the error detection and correction device 1000 obtains a two's complement inverse operation program 100C through two's complement conversion, in which the two's complement inverse operation program 100C corresponds to the operation program 100. Moreover, the error detection and correction device 1000 performs error detection and/or error correction on the operation program 100 according to respective operation result of the operation program 100 and the two's complement inverse operation program 100C. The error detection and correction device 1000 includes a conversion unit 200, a program execution unit 250, a checksum operation unit 300, a comparison unit 400 and an output unit 500. Moreover, the storage unit 600 may be disposed in the error detection and correction device 1000 or disposed outside the error detection and correction device 1000. The error detection and correction device 1000 performs error detection and/or error correction on the operation program 100 to operate the above-mentioned conversion unit 200, program execution unit 250, checksum operation unit 300, comparison unit 400, output unit 500 and storage unit 600.

The operation program 100 has one or more variables 120. The error detection and correction device 1000 may access values of the variables 120 from the storage unit 600. Furthermore, the conversion unit 200 performs two's complement conversion to obtain the two's complement variables 120C of the two's complement inverse operation program 100C according to the variables 120. Correspondingly, values of the two's complement variables 120C may be accessed from the storage unit 600. Moreover, the operation program 100 includes one or more functions 130. The conversion unit 200 may perform two's complement conversion to obtain the inverse operation functions 130C of the two's complement inverse operation program 100C according to the functions 130.

The program execution unit 250 may execute the functions 130 to obtain a first operation result 140 of the operation program 100 according to the variables 120. Correspondingly, the program execution unit 250 may execute the inverse operation functions 130C to obtain a second operation result 140C of the two's complement inverse operation program 100C according to the two's complement variables 120C.

The comparison unit 400 compares the first operation result 140 with the second operation result 140C. If the second operation result 140C is equal to the two's complement of the first operation result 140, it is determined that the program execution unit 250 correctly executes the functions 130 of the operation program 100, and no numeric errors occur when the values of the variables 120 are accessed from the storage unit 600. Furthermore, it is determined that the program execution unit 250 correctly executes the inverse operation functions 130C of the two's complement inverse operation program 100C, and no numeric errors occur when the values of the two's complement variables 120C are accessed from the storage unit 600.

The checksum operation unit 300 performs checksum operation on the variables 120 to assist determining whether the operation program 100 is executed correctly. Correspondingly, the checksum operation unit 300 performs checksum operation on the two's complement variables 120C to assist determining whether two's complement inverse operation program 100C is executed correctly.

The output unit 500 outputs the first operation result 140, the second operation result 140C or the error message 150 according to the comparison result of the comparison unit 400 and the checksum operation result of the checksum operation unit 300. If the comparison results and the checksum operation results indicate that the operation program 100 is executed correctly, the output unit 500 outputs the first operation result 140. On the other hand, if the comparison results and the checksum operation results indicate that the operation program 100 and the two's complement inverse operation program 100C are both erroneously-executed, the output unit 500 outputs the error message 150.

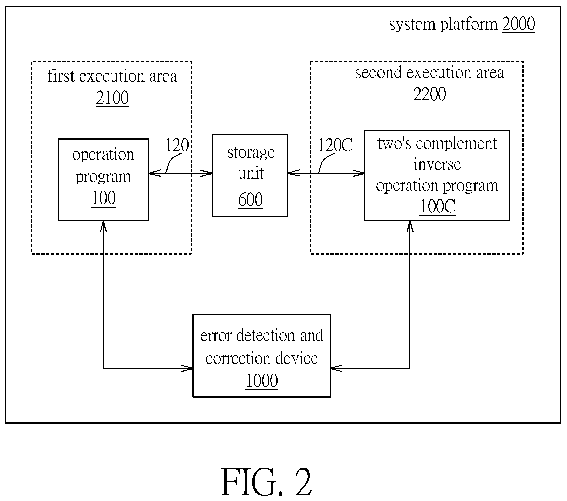

FIG. 2 is a schematic diagram of an error detection and correction device 1000 operating on a system platform 2000 according to an embodiment of the disclosure. Referring to FIG. 2. The error detection and correction device 1000 may operate on the system platform 2000 to detect and/or correct error(s) of the operation program 100. The system platform 2000 may be, for example, a system platform of a personal computer, a server, an industrial computer, a military computer or satellite equipment. The operation program 100 may refer to, for example, a software application program executed on the system platform 2000. The storage unit 600 is also disposed on the system platform 2000 (i.e., the storage unit 600 may not necessarily to be included in the error detection and correction device 1000). The storage unit 600 may refer to, for example, a register or a memory through which values of the variables 120 of the operation program 100 and the two's complement variables 120C of the two's complement inverse operation program 100C are accessed.

Taking the system platform 2000 of the satellite equipment as an example. When the satellite equipment operates in the outer space, the state of the storage unit 600 of the system platform 2000 may easily be changed due to particle collision or electromagnetic interference, hence reversing the bit data stored in the storage unit 600 (e.g., reversing from bit "1" to bit "0") and leading to numeric errors in values of the variables 120 of the operation program 100. The error detection and correction device 1000 of the disclosure performs error detection and/or error correction on the operation program 100 executed on the system platform 2000, for the system platform 2000 of the satellite equipment. The error detection and correction device 1000 may generate a first execution area 2100 and a second execution area 2200 on the system platform 2000.

The first execution area 2100 is an area where a normal software or normal processes are executed. The operation program 100 is executed in the first execution area 2100. Moreover, the error detection and correction device 1000 performs two's complement conversion to obtain a corresponding two's complement inverse operation program 100C according to the operation program 100. The two's complement inverse operation program 100C is executed in the second execution area 2200. The second execution area 2200 is the execution area of the two's complement inverse operation process.

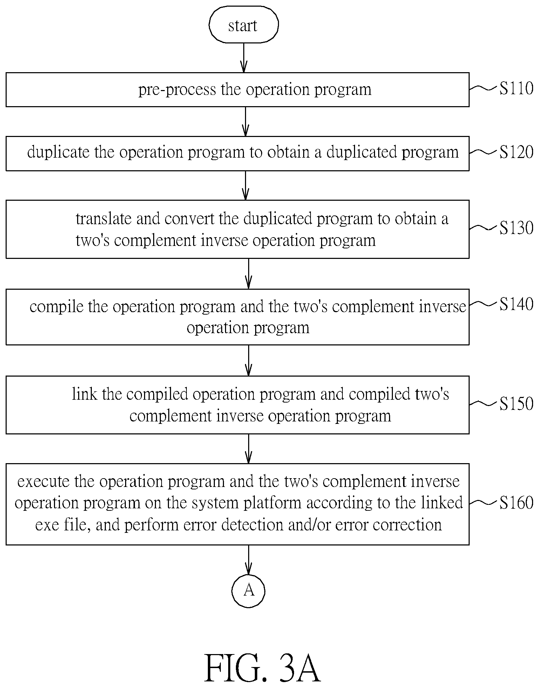

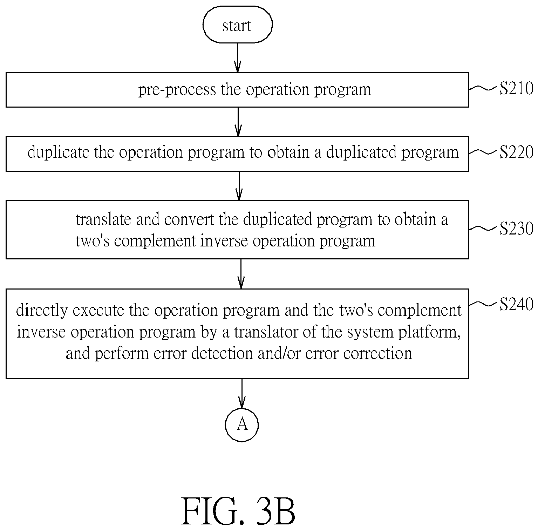

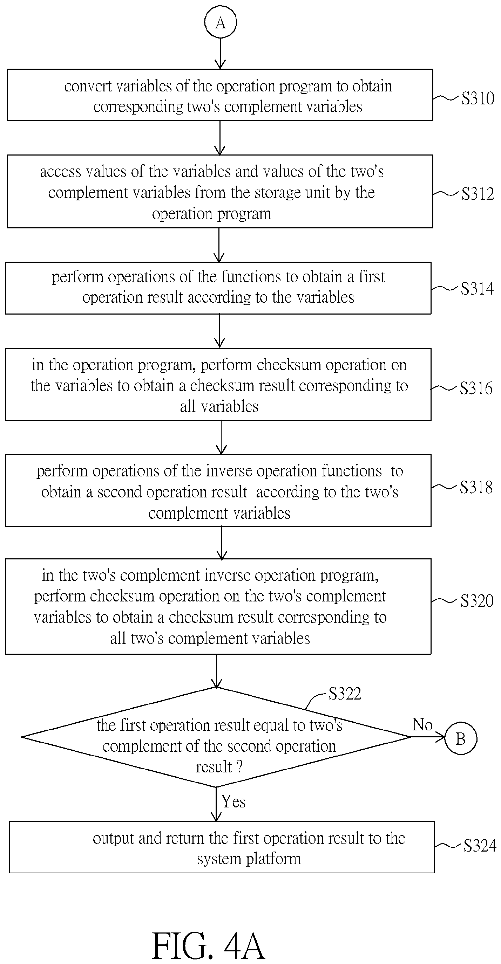

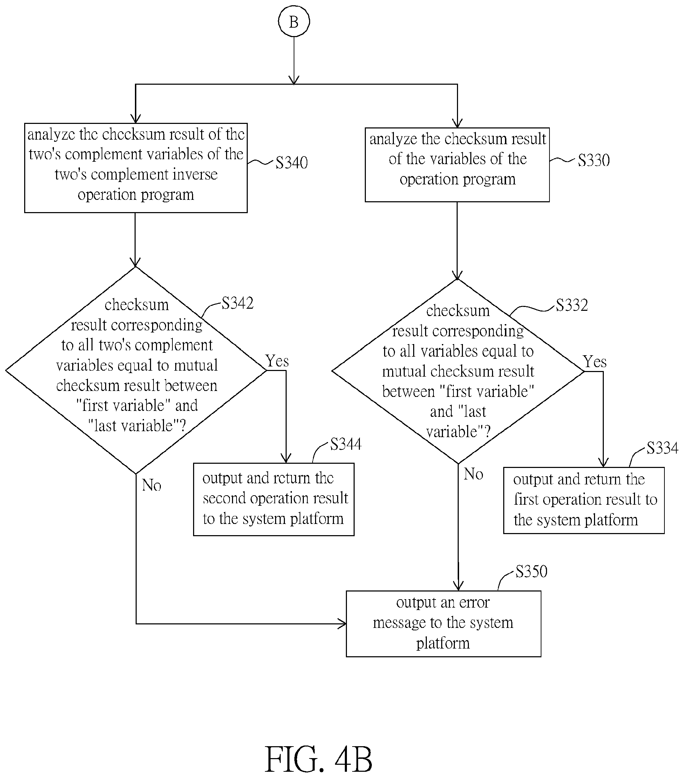

Basic operations of the error detection and correction device 1000 are briefly disclosed in above paragraphs. Detailed operations of the error detection and correction device 1000 are disclosed below in detail with reference to steps and flows of the error detection and correction method illustrated in FIGS. 3A, 3B, 4A and 4B.

FIG. 3A is a flowchart of an error detection and correction method according to an embodiment of the disclosure. In the present embodiment, the operation program 100 may be a program which is compiled in advance. Referring to FIG. 3A (by reference to FIGS. 1 and 2). Firstly, at step S110, the operation program 100 is pre-processed by the error detection and correction device 1000, for example, to confirm the compatibility between the operation program 100 and the execution environment of the system platform 2000. Next, at step S120, the operation program 100 is duplicated by the conversion unit 200 to obtain a duplicated operation program 100 (for simplicity, the duplicated program is not illustrated in FIGS. 1 and 2). The duplicated program includes all functions 130 of the operation program 100.

Next, at step S130, the duplicated program is translated and converted by the conversion unit 200 to obtain a two's complement inverse operation program 100C. The functions 130 of the duplicated program are respectively converted into the inverse operation functions 130C by the conversion unit 200, wherein the two's complement inverse operation program 100C is composed of the inverse operation functions 130C. Next, at step S140, the operation program 100 and the two's complement inverse operation program 100C are compiled. Next, at step S150, the compiled operation program 100 and the compiled two's complement inverse operation program 100C are linked, so as to obtain an exe file that may be executed on the system platform 2000. Next, at step S160, the operation program 100 and the two's complement inverse operation program 100C are executed on the system platform 2000, either concurrently or consecutively, according to the linked exe file, and subsequent error detection and/or error correction are performed.

FIG. 3B is a flowchart of an error detection and correction method according to another embodiment of the disclosure. In the present embodiment, the operation program 100 may refer to a directly-interpreted program with no necessity to be compiled. Steps S210 to S230 of FIG. 3B are identical to steps S110 to S130 of FIG. 3A. Furthermore, Step S240 of FIG. 3B is similar to step S160 of FIG. 3A, but is different in that, at step S240 of FIG. 3B the operation program 100 and the two's complement inverse operation program 100C are directly executed, either concurrently or consecutively, by the interpreter of the system platform 2000, and no necessity to perform compilation and linking.

Detailed implementation for step S130 of FIG. 3A and step S230 of FIG. 3B are described below by reference to FIG. 1 and Table 1. Two's complement conversion is performed by the conversion unit 200 of the error detection and correction device 1000 to obtain the two's complement variables 120C of the two's complement inverse operation program 100C according to the variables 120 of the operation program 100. The two's complement variables 120C may be two's complement of the variables 120. If the variables 120 are signed numbers, their sign is opposite to the sign of the two's complement variables 120C and the variables 120. If the variables 120 are unsigned numbers, the two's complement variables 120C are identical to the variables 120. Moreover, the conversion unit 200 may perform two's complement conversion to obtain inverse operation functions 130C according to the functions 130 of the operation program 100. The two's complement inverse operation program 100C is composed of the two's complement variables 120C and the inverse operation functions 130C. Table 1 lists some examples of the functions 130 and the inverse operation functions 130C:

**Table 1**

| Type of function | Operand (variables 120) | Functions 130 | Inverse operation functions 130C |
|---|---|---|---|
| Arithmetic operation | Variable x | +x, -x, *x, | +x, -x, *x, |
| | | /x, %x | /X, %x |
| | Fixed value m | +m, -m, *m, | -m, +m, *m, |
| | | /m, %m | /m, %m |
| Increment/decrement operation | | ++, -- | --, ++ |
| Assign operation | Variable x | =x, +=x, | =x, +=x, |
| | | -=x, *=x, | -=x, *=x, |
| | | /=x, %=x | /=X, %=x |
| | Fixed value m | =m, +=m, | =m, -=m, |
| | | -=m, *=m, | +=m, *=m, |
| | | /=m, %=m | /=m, %=m |
| Relation operation | | >, >=, <, | <, <=, >, |
| | | <=,==, != | >= ,==, != |
| Logic operation | | &&, ∥, ! | &&, ∥, ! |
| Bitwise operation | | &, \|, ^, ∼, | &, \|, ^, ~, |
| | | « » > | « » > |
| Array | Variable xlndex (xlndex is an integer variable) | array[xlndex] | array[-xlndex] |
| | Fixed value N (N is an integer) | array[N] | array[N] |
| Pointer | Variable x, xPtr, yOffset (yOffset is an integer variable) | xPtr=&x | xPtr=&x |
| | | *(xPtr+yOffset) | *(xPtr-yOffset) |
| | Fixed value N (N is an integer) | xPtr=&x | xPtr=&x |
| | | *(xPtr+N) | *(xPtr+N) |

Referring to Table 1, taking the functions 130 of "arithmetic operation" as "+", "-", "*", "I", and "%". If the operand of the functions 130 is a variable "x", the inverse operation functions 130C are completely identical to the functions 130. That is, the inverse operation functions 130C are "+", "-", "*", "I", and "%". On the other hand, if the functions 130 are "+", "-", "*", "/", and "%" and the operand of the functions 130 is a fixed value "m", the inverse operation functions 130C are "-", "+", "*", "I", and "%". If the functions 130 are "+" and "-", the inverse operation functions 130C are two's complement inverse operations, that is, the inverse operation functions 130C are "-" and "+"; if the functions 130 are "*", "/", and "%", the inverse operation functions 130C are completely identical to the functions 130. Thus, if the operand of the functions 130 is a variable "x", the inverse operation functions 130C are completely identical to the functions 130. If the operand of the functions 130 is a fixed value "m", the inverse operation functions 130C could be identical to the functions 130 or the inverse operation functions 130C are the two's complement inverse operations of the functions 130.

Besides, let the functions 130 of "assign operation" be "=", "+=", "-=", "*=", "/=", and "%=". If the operand of the functions 130 is a variable "x", the inverse operation functions 130C are still "=", "+=", "-=", "*=", "/=", and "%=", and the inverse operation functions 130C are completely identical to the functions 130. If the operand of the functions 130 is a fixed value "m", the inverse operation functions 130C of "+=" and "-=" respectively are the two's complement inverse operations of the functions 130 of "-=" and "+=".

Also, let the functions 130 of "pointer operation" be "&" and "*". If the operand of the functions 130 is an integer "N" whose value is fixed, the inverse operation functions 130C are completely identical to the functions 130. If the operand of the functions 130 is a variable, such as "xPtr" and "yOffset", the inverse operation function 130C of "*(xPtr-yOffset)" is the two's complement inverse operation of the function 130 of "*(xPtr+yOffset)".

Furthermore, let the functions 130 of "increment/decrement operation" and "operation relation" be "++", "--", ">", ">=", "<", "<=". If the operand of the functions 130 of "increment/decrement operation" and "operation relation" is a fixed value "m", the inverse operation functions 130 are the two's complement inverse operation of the functions 130, that is, the inverse operation functions 130 are "--", "++", "<", "<=", ">", ">=". Also, in the example of the functions 130 of "relation operation", if the functions 130 are "==" and "!=", the inverse operation functions 130C are still "==" and "!=", that is, the inverse operation functions 130C are identical to the functions 130.

As disclosed above, when the conversion unit 200 of the error detection and correction device 1000 performs two's complement conversion on the functions 130 and obtains the inverse operation functions 130C, most of the inverse operation functions 130C are identical to the original functions 130. When the operand of a part of the functions 130 is a fixed value, the inverse operation functions 130C may be obtained by reversing the sign of the functions 130 or adjusting the comparison relation of value size (for example, adjusting ">" to "<").

Detailed implementations of step S160 of FIG. 3A and step S240 of FIG. 3B are disclosed below with FIG. 1 and Table 2. The program execution unit 250 of the error detection and correction device 1000 may concurrently or consecutively execute the operation program 100 and the two's complement inverse operation program 100C to obtain a first operation result 140 and a second operation result 140 respectively. Table 2 lists examples of the program code of operation program 100, the corresponding first operation result 140, the program code of the two's complement inverse operation program 100C, and the corresponding second operation result 140C :

**Table 2**

| | | Operation program 100 | | | Two's complement inverse operation program 100c | |
|---|---|---|---|---|---|---|
| Variables | | Variables 120 | | | Two's complement variables 120C | |
| | | x, i | | | x", i" | |
| Functions | | Functions 130 | | | Inverse operation functions 130C | |
| | | =, <=, > ++, += | | | =, >= , --, += | |
| Operation result | | First operation result 140 | | | Second operation result 140C | |
| | | x=55 | | | x"=-55 | |
| Program code | | Int example (void) | | | Int example (void) | |
| of the operation program | { | | | { | | |
| | | int x=0; | | | int x"=-0; | |
| | | int i=0; | | | int i"=-0; | |
| | | for (i=1; i<=10; i++) | | | for (i"=-1 ; i">=-1 0; i"--) | |
| | | { | | | { | |
| | | | x+=i; } | | | x"+=i"; |
| | | | | | } | |
| | | return x; } | | | return x"; | |
| | | | | } | | |

As indicated in Table 2, in the operation program 100, the operand of the functions 130 is a variable 120, which may be an input variable inputted from the outside of the program or a local variable of the program. In the present embodiment, the variables 120 of the functions 130 of "=", "<=", "++", "+=" are local variables "x" and "i". Refer to the "program code" column in Table 2. In the example where the value of the variable "i" is accumulated from "1" to "10", the operation program 100 declares that the initial values of variables "x" and "i" both are integer "0".

When executing the functions 130 of "=", "<=", "++", and "+=", the program execution unit 250 uses variable "i" as recursion index. When recursion is performed, the value of variable "i" is progressively increased from "1" to "10". When the function 130 of "+=" is executed within the recursion, the value of variable "i" is accumulated to variable "x". After 10 times of recursion, the last value of variable "x" obtained by the operation program 100 is a numeric value "55". Meanwhile, the first operation result 140 generated by the operation program 100 is a numeric value "55".

Moreover, the conversion unit 200 performs two's complement conversion to convert variables "x" and "i" (the variables 120 of the operation program 100) respectively into a two's complement variable " (x") " and a two's complement variable " (i") " (the two's complement variables 120C of the two's complement inverse operation program 100C), the two's complement inverse operation program 100C declares that the two's complement variable " (x") " and the two's complement variable are " (i") " and "-0" respectively. Also, the conversion unit 200 converts the function 130 of increment operation, that is, "++", into the inverse operation function 130C of decrement operation, that is, "--", and when the two's complement inverse operation program 100C performs recursion, the value of the two's complement variable " (i") " progressively decreases from "-1" to "-10". Thus, after 10 times of recursion, the last value of two's complement variable " (x") " obtained by the two's complement inverse operation program 100C is a numeric value "-55". Meanwhile, the second operation result 140C generated by the two's complement inverse operation program 100C is a numeric value "-55".

Then, the comparison unit 400 compares the first operation result 140 with the second operation result 140C. The comparison result is: the numeric value "-55" of the second operation result 140C and the numeric value "55" of the first operation result 140 have identical absolute value but have opposite sings. In other words, the numeric value "-55" of the second operation result 140C is the two's complement of the numeric value "55" of the first operation result 140.

As disclosed above, the comparison result of the comparison unit 400 shows that: the first operation result 140 of the operation program 100 is equal to the two's complement of the second operation result 140C of the two's complement inverse operation program 100C. Thus, the error detection and correction device 1000 may determine that: when the program execution unit 250 executes the operation program 100 and the two's complement inverse operation program 100C, the operation program 100 and the two's complement inverse operation program 100C both are executed correctly, and during the execution of the programs, no numeric errors occur when the values of the variables 120 of "x", "i" and the two's complement variables 120C " (x") " and " (i") " are accessed from the storage unit 600.

After step S160 of FIG. 3A and step S240 of FIG. 3B are executed, steps S310 to S350 of FIGS. 4A and 4B will be performed. FIGS. 4A and 4B are detailed flowcharts of an error detection and correction method for detecting and/or detecting errors according to the comparison result of the operation program 100 and the two's complement inverse operation program 100C and the checksum result according to an embodiment of the disclosure. Referring to FIG. 4A (also by reference to FIGS. 1 and 2). At step S310, two's complement conversion is performed on the variables 120 of the operation program 100 by the conversion unit 200 to obtain corresponding two's complement variables 120C. Then, at step S312, the values of the variables 120 and the values of the two's complement variables 120C are accessed from the storage unit 600 by the operation program 100. Then, at step S314, when the operation program 100 is executed by the program execution unit 250, operations of the functions 130 are performed by the program execution unit 250 to obtain a first operation result 140 according to the variables 120. Then, at step S316, checksum operation is performed on all variables 120 (such as variables "i" and "x") of the operation program 100 by the checksum operation unit 300 to obtain a checksum result corresponding to all variables 120 of the operation program 100.

Then, at step S318, when the two's complement inverse operation program 100C is executed by the program execution unit 250 , operations of the inverse operation functions 130C are performed by the program execution unit 250 to obtain a second operation result 140C according to the two's complement variables 120. Then, at step S320, checksum operation is performed on all two's complement variables 120C (such as variables " (i") " and " (x") ") of the two's complement inverse operation program 100C by the checksum operation unit 300 to obtain a checksum result corresponding to all two's complement variables 120 of the two's complement inverse operation program 100C.

Then, at step S322, the first operation result 140 and the second operation result 140C are compared by the comparison unit 400 to determine whether the first operation result 140 is equal to the two's complement of the second operation result 140C and accordingly determine whether the operation program 100 and the two's complement inverse operation program 100C are executed correctly. At step S322, if the first operation result 140 is equal to the two's complement of the second operation result 140C, the determination is as follows: the program execution unit 250 correctly executes the operation program 100, the program execution unit 250 also correctly executes the two's complement inverse operation program 100C, and no numeric errors occur when the values of the variables 120 of the operation program 100 and the two's complement variables 120C of the two's complement inverse operation program 100C are accessed from the storage unit 600 by the program execution unit 250 when executing the operation program 100 and the two's complement inverse operation program 100C . Thus, it may be determined that both the first operation result 140 and the second operation result 140C are correct. Then, at step S324, the first operation result 140 is outputted and returned to the system platform 2000 by the output unit 500.

On the other hand, at step S322, if the comparison result of the comparison unit 400 shows that the first operation result 140 is not equal to the two's complement of the second operation result 140C, the determination is as follows: the program execution unit 250 erroneously executes the operation program 100 and/or the program execution unit 250 erroneously executes the two's complement inverse operation program 100C (that is, at least one of the operation program 100 and the two's complement inverse operation program 100C is executed erroneously). Meanwhile, steps S330 and S340 of FIG. 4B are performed concurrently or consecutively.

Referring to FIG. 4B, at step S330, the checksum result corresponding to all variables 120 of the operation program 100 are analyzed by the checksum operation unit 300. Then, at step S332, whether the mutual checksum result corresponding to all variables 120 of the operation program 100 is equal to the mutual checksum result corresponding to the variables between the "first variable" and the "last variable" of the operation program 100. If the determination at step S332 shows that the above checksum results are equal, this indicates that the operation program 100 is executed correctly, and at step S334, the first operation result 140 of the operation program 100 is outputted and returned to the system platform 2000. If the determination in step S332 shows that the above checksum results are not equal, this indicates that the operation program 100 is executed erroneously, and at step S350, an error message 150 is outputted to the system platform 2000.

On the other hand, at step S340 to step S344, the checksum result is analyzed in the two's complement inverse operation program 100C to determine whether the two's complement inverse operation program 100C is executed correctly. At step S340, the checksum result corresponding to all two's complement variables 120C of the two's complement inverse operation program 100C is analyzed by the checksum operation unit 300. Then, at step S342, whether the checksum result corresponding to all two's complement variables 120C of the two's complement inverse operation program 100C is equal to the mutual checksum result corresponding to the variables between the "first variable" and the "last variable" of the two's complement inverse operation program 100C is determined. If the determination in step S342 shows that the above checksum results are equal, this indicates that the two's complement inverse operation program 100C is executed correctly, and at step S344, the second operation result 140C of the operation program 100 is outputted and returned to the system platform 2000. If the determination in step S342 shows that the above checksum results are not equal, this indicates that the two's complement inverse operation program 100C is executed erroneously, and at step S350, an error message 150 is outputted to the system platform 2000.

Detailed implementation of step S316 and step S320 of FIG. 4Aand steps S330, S332, S340 and S342 of FIG. 4B for performing checksum operation and analyzing the checksum operation result are described below by reference to FIG. 1, Table 3, Table 4 and Table 5.

**Table 3**

| Variables | x, y |
|---|---|
| Program code of the operation program | x=1; |
| | y=2; |
| | y=3; |
| First variable | (x="1") |
| Last variable | (y="3") |
| Checksum operation | x^y=1^2=3 |
| | x^y=1^3=2 |

Refer to Table 3. When operation is performed on any of the variables "x" and "y" of the operation program 100 and changes the value of the variable, checksum operation must be immediately performed on the variable with value change to update the checksum operation result. Let the variable "x" and the variable "y" be taken for example. After the program code of "x=1;" is performed, the value of the variable "x" changes to "1". After the program code of "y=2;" is performed, the value of the variable "y" changes to "2". Thus, checksum operation must be performed on the variable "x" and the variable "y" to obtain an updated checksum result: "1^2=3", wherein the operation symbol "^" represents a mutually exclusive or (XOR) operation. Then, after the program code of "y=3;" is performed, the value of the variable "y" changes to "3". Thus, checksum operation must be performed on the variable "x" and the variable "y" to obtain an updated checksum result: "1^3=2".

During the execution of the operation program, the "first variable" is defined as the value of the first appearing variable among the variables of the operation program 100. According to the execution of the program code as illustrated in Table 3, the "first variable" is the numeric value "1" of the variable "x". On the other hand, the "last variable" is defined as the value of the last appearing variable among the variables of the operation program 100. According to the execution of the program code as illustrated in Table 3, the "last variable" is the numeric value "3" of the variable "y". The checksum result obtained by performing mutual checksum operation on the variables between the first variable value "1" and the last variable value "3" is: "1^3=2".

**Table 4**

| | Original operation program 100 | | | Operation program 100 performing checksum operation | | |
|---|---|---|---|---|---|---|
| Variables 120 | x, i | | | x, i | | |
| Checksum variable | | | | checksum | | |
| Functions 130 | =, <=, ++ | | | =, <=, ++ | | |
| | += | | | += | | |
| First operation result 140 | x=55 | | | | | |
| Program code | int example (void) { | | | int checksum=0; | | |
| | | | | | | |
| | | int x=0; | | int example (void) { | | |
| | | int i=0; | | | | |
| | | | | | int x=0; | |
| | | for (i=1; i<=10; i++) | | | checksum^=x; | |
| | | { | | | int i=0; | |
| | | | x+=i; | | checksum^=i; | |
| | | } | | | | |
| | | | | | for (checksum^=i, i=1, | |
| | | return x; | | | checksum^=i; i<=10; | |
| | } | | | | checksum"=i, i++, | |
| | | | | | { | |
| | | | | | | checksum^=x, |
| | | | | | | x+=i, |
| | | | | | | checksum^=x; |
| | | | | | } | |
| | | | | | | |
| | | | | | return x; | |
| | | | | } | | |

Next, referring to Table 4, checksum operations are performed on all variables "x" and "i" of the operation program 100 to obtain a checksum results corresponding to all variables "x" and "i" according to the sub-functions of "checksum^=x" and "checksum^=i". For example, after the variable "x" is declared, the checksum operation of "checksum^=x" is performed on the variable "x", both before and after the variable "i" is accumulated to the variable "x". Similarly, after the variable "i" is declared, the checksum operation of "checksum^=i" is performed on the variable "i", both before and after increment operation is performed on the variable "i".

Additionally, the "first variable" and the "last variable" are analyzed. In the operation program 100, the "first variable" is the value of the variable which firstly appears among all variables (here, is the value of variable "i"), and the "last variable" is the value of the variable which last appears among all variables (here, is the value of variable "x"). When the execution of the operation program 100 is completed, mutual checksum operation of "checksum=i^x" corresponding to the variable between the "first variable" (the value of the firstly appearing variable "i") and the "last variable" (the value of the last appearing variable "x") is performed to obtain a mutual checksum result corresponding to the variable between the "first variable" and the "last variable".

**Table 5**

| | Original two's complement inverse operation program 100C | | | Two's complement inverse operation program 100C performing checksum operation | | |
|---|---|---|---|---|---|---|
| Two's complement variables 120C | x", i" | | | x", i" | | |
| Checksum variables | | | | checksum | | |
| Inverse | =, >=, -- | | | =, >=, > -- | | |
| operation functions 130C | += | | | += | | |
| Second operation result 140C | x"=-55 | | | | | |
| Program code | int example (void) | | | int checksum=0; | | |
| | { | | | | | |
| | | int x"=-0; | | int example (void) | | |
| | | int i"=-0; | | { | | |
| | | | | | int x"=-0; | |
| | | for (i"=-1 ; i">=-1 0; i"--) | | | checksum^=x"; | |
| | | { | | | int i"=-0; | |
| | | | x"+=i"; | | checksum^=i"; | |
| | | } | | | | |
| | | | | | for (checksum^=i", i"=-1, } | |
| | | return x"; | | | checksum^=i"; i">=-10; | |
| | } | | | | checksum^=i", i"--, | |
| | | | | | checksum^=i") | |
| | | | | | { | |
| | | | | | | checksum^=x", |
| | | | | | | x"+=i", |
| | | | | | | checksum^=x"; |
| | | | | | } | |
| | | | | | checksum=i"^x"; | |
| | | | | | | |
| | | | | | return x"; | |
| | | | | } | | |

Refer to Table 5. Checksum operation is performed on all variables "x"" and "i"" to obtain a checksum result corresponding to all variable "x"" and "i"" of the two's complement inverse operation program 100C according to the sub-functions of "checksum^=x"" and "checksum^=i"". Mutual checksum operation of "checksum=i"^x"" is performed on the variables between the "first variable" and the "last variable".

As disclosed in above embodiments, the error detection and correction device 1000 of the disclosure converts an operation program 100 into a two's complement inverse operation program 100C, executes the operation program 100 and the two's complement inverse operation program 100C, compares the operation results of the operation program 100 with the two's complement inverse operation program 100C (the first operation result 140 and the second operation result 140C) and checks whether the first operation result 140 is two's complement of the second operation result 140C to determine whether the operation program 100 and the two's complement inverse operation program 100C are executed correctly, and determine whether numeric errors occur to the values of the variables 120 and the values of the accessed two's complement variables 120C. Furthermore, the error detection and correction device 1000 may be assisted with checksum operation to enhance the accuracy of the values of the variables 120 and the two's complement variables 120C when operation program 100 and the two's complement inverse operation program 100C are executed. Thus, the disclosure is capable of detecting and/or correcting erroneous execution of the operation program 100 by using software algorithms only and resolving single-event upset with a lower cost.
It will be apparent to those skilled in the art that various modifications and variations may be made to the disclosed embodiments.

## Claims

1. An error detection and correction device (1000), for detecting and/or correcting error(s) of an operation program (100), comprising: a conversion unit (200) for converting the operation program (100) into a two's complement inverse operation program (100C) and converting a plurality of variables (120) of the operation program (100) into a plurality of two's complement variables (120C), and a program execution unit (250) for executing the operation program (100) to obtain a first operation result (140) according to the variables (120) and executing the two's complement inverse operation program (100C) to obtain a second operation result (140C) according to the two's complement variables (120C), wherein, the error detection and correction device (1000) further comprising:
a checksum operation unit (300), for performing the following: calculating a mutual checksum result corresponding to all of the variables (120) according to the operation program (100), calculating a last checksum result in an operation process corresponding to the variables (120), calculating a mutual checksum result corresponding to all of the two's complement variables (120C) according to the two's complement inverse operation program (100C) and calculating a last checksum result in the operation process corresponding to the two's complement variables (120C);
a comparison unit (400), for performing at least one of the following: comparing the first operation result (140) with the second operation result (140C), comparing the mutual checksum result and the last checksum result corresponding to the variables (120), or comparing the mutual checksum result and the last checksum result corresponding to the two's complement variables (120C); and
an output unit (500), for outputting the first operation result (140), the second operation result (140C) or an error message (150) according to a comparison result of the first operation result (140) and the second operation result (140C), a comparison result of the mutual checksum result and the last checksum result corresponding to the variables (120), or a comparison result of the mutual checksum result and the last checksum result corresponding to the two's complement variables (120C),
wherein the operation program (100) accesses the variables (120) from a storage unit (600), and the two's complement inverse operation program (100C) accesses the two's complement variables (120C) from the storage unit (600).

2. The error detection and correction device according to claim 1, wherein the two's complement variables are two's complements of the variables, if the variables are signed numbers, the sign of the variables is opposite to that of the two's complement variables.

3. The error detection and correction device according to claim 2, wherein the operation program includes a plurality of functions, and the two's complement inverse operation program includes a plurality of inverse operation functions, the program execution unit executes the operation program according to the variables and the functions and executes the two's complement inverse operation program according to the two's complement variables and the inverse operation functions, if the operands of the functions in the operation program are the variables, the inverse operation functions are identical to the functions.

4. The error detection and correction device according to claim 3, wherein in the operation program, if the operands of the functions are a plurality of fixed values, and the functions are addition operator, subtraction operator, increment operator, decrement operator, greater-than operator or less-than operator, the inverse operation functions are inverse operations of the functions.

5. The error detection and correction device according to claim 1, wherein if the comparison unit compares and determines that the first operation result is equal to the two's compliment of the second operation result, the comparison unit determines that the program execution unit correctly executes the operation program and correctly executes the two's complement inverse operation program, and the output unit outputs the first operation result.

6. The error detection and correction device according to claim 1, wherein if the comparison unit compares and determines that the first operation result is not equal to the two's compliments of the second operation result, the comparison unit determines that the program execution unit erroneously executes the operation program and/or erroneously executes the two's complement inverse operation program.

7. The error detection and correction device according to claim 6, wherein if the comparison unit determines that the operation program and/or the two's complement inverse operation program are erroneously executed, the comparison unit compares the mutual checksum result and the last checksum result corresponding to the variables and compares the mutual checksum result and the last checksum result corresponding to the two's complement variables.

8. The error detection and correction device according to claim 7, wherein if the mutual checksum result is equal to the last checksum result corresponding to the variables, the comparison unit determines that the operation program is executed correctly, and the output unit outputs the first operation result, if the mutual checksum result is equal to the last checksum result corresponding to the two's complement variables, the comparison unit determines that the two's complement inverse operation program is executed correctly, and the output unit outputs the second operation result.

9. The error detection and correction device according to claim 7, wherein if the mutual checksum result is not equal to the last checksum result corresponding to the variables, and if the mutual checksum result is not equal to the last checksum result corresponding to the two's complement variables, the comparison unit determines that the operation program is executed erroneously and the two's complement inverse operation program is executed erroneously, and the output unit outputs the error message.

10. An error detection and correction method, for detecting and/or correcting error(s) of an operation program (100), comprising: converting the operation program (100) into a two's complement inverse operation program (100C), converting a plurality of variables (120) of the operation program (100) into a plurality of two's complement variables (120C), executing the operation program (100) to obtain a first operation result (140) according to the variables (120), executing the two's complement inverse operation program (100C) to obtain a second operation result (140C) according to the two's complement variables (120C), wherein, the error detection and correction method further comprising:
calculating a mutual checksum result corresponding to all of the variables (120) according to the operation program (100);
calculating a last checksum result in an operation process corresponding to the variables (120);
calculating a mutual checksum result corresponding to all of the two's complement variables (120C) according to the two's complement inverse operation program (100C);
calculating a last checksum result in the operation process corresponding to the two's complement variables (120C);
comparing the first operation result (140) with the second operation result (140C), comparing the mutual checksum result and the last checksum result corresponding to the variables (120), or comparing the mutual checksum result and the last checksum result corresponding to the two's complement variables (120C); and
outputting the first operation result (140), the second operation result (140C) or an error message (150) according to a comparison result of the first operation result (140) and the second operation result (140C), a comparison result of the mutual checksum result and the last checksum result corresponding to the variables (120), or a comparison result of the mutual checksum result and the last checksum result corresponding to the two's complement variables (120C).
wherein the variables (120) are accessed from a storage unit (600) by the operation program (100), and the two's complement variables (120C) are accessed from the storage unit (600) by the two's complement inverse operation program (100C).

11. The error detection and correction method according to claim 10, wherein the two's complement variables are two's complements of the variables; if the variables are signed numbers, the sign of the variables is opposite to that of the two's complement variables.

12. The error detection and correction method according to claim 11, wherein the operation program includes a plurality of functions, and the two's complement inverse operation program includes a plurality of inverse operation functions, executing the operation program according to the variables and the functions and executing the two's complement inverse operation program according to the two's complement variables and the inverse operation functions, if the operands of the functions in the operation program are the variables, the inverse operation functions are identical to the functions.

13. The error detection and correction method according to claim 12, wherein in the operation program, if the operands of the functions are a plurality of fixed values, and the functions are addition operator, subtraction operator, increment operator, decrement operator, greater-than operator or less-than operator, the inverse operation functions are inverse operations of the functions.

14. The error detection and correction method according to claim 10, if the first operation result is equal to the two's compliment of the second operation result, determining that the operation program is correctly executed and the two's complement inverse operation program is correctly executed, and outputting the first operation result.

15. The error detection and correction method according to claim 10, if the first operation result is not equal to the two's compliments of the second operation result, determining that the operation program is erroneously executed and/or the two's complement inverse operation program is erroneously executed.

16. The error detection and correction method according to claim 15, wherein if determining that the operation program and/or the two's complement inverse operation program are erroneously executed, comparing the mutual checksum result and the last checksum result corresponding to the variables and comparing the mutual checksum result and the last checksum result corresponding to the two's complement variables.

17. The error detection and correction method according to claim 16, wherein:
if the mutual checksum result is equal to the last checksum result corresponding to the variables, determining that the operation program is executed correctly, and outputting the first operation result; and
if the mutual checksum result is equal to the last checksum result corresponding to the two's complement variables, determining that the two's complement inverse operation program is executed correctly, and outputting the second operation result.

18. The error detection and correction method according to claim 16, wherein if the mutual checksum result is not equal to the last checksum result corresponding to the variables, and if the mutual checksum result is not equal to the last checksum result corresponding to the two's complement variables, determining that the operation program is executed erroneously and the two's complement inverse operation program is executed erroneously, and outputting the error message.

## Patentansprüche

1. Vorrichtung zur Fehlererkennung und -Korrektur (1000) zum Detektieren und/oder Korrigieren eines Fehlers bzw. von Fehlern eines Operationsprogramms (100), die aufweist: eine Umwandlungseinheit (200) zum Umwandeln des Operationsprogramms (100) in ein Programm für inverse Zweierkomplement-Operation (100C) und Umwandeln einer Vielzahl von Variablen (120) des Operationsprogramms (100) in eine Vielzahl von Zweierkomplement-Variablen (120C), und eine Programmausführungseinheit (250) zum Ausführen des Operationsprogramms (100), um ein erstes Operationsergebnis (140) entsprechend den Variablen (120) zu erhalten, und zum Ausführen des Programms für inverse Zweierkomplement-Operation (100C), um ein zweites Operationsergebnis (140C) entsprechend den Zweierkomplement-Variablen (120C) zu erhalten, wobei die Vorrichtung zur Fehlererkennung und -Korrektur (1000) ferner aufweist:
eine Prüfsummen-Operationseinheit (300), um Folgendes durchzuführen: Berechnen eines gegenseitigen Prüfsummenergebnisses, das sämtlichen Variablen (120) entspricht, entsprechend dem Operationsprogramm (100), Berechnen eines letzten Prüfsummenergebnisses in einem Operationsprozess, das den Variablen (120) entspricht, Berechnen eines gegenseitigen Prüfsummenergebnisses, das sämtlichen Zweierkomplement-Variablen (120C) entspricht, entsprechend dem Programm für inverse Zweierkomplement-Operation (100C), und Berechnen eines letzten Prüfsummenergebnisses in dem Operationsprozess, das den Zweierkomplement-Variablen (120C) entspricht;
eine Vergleichseinheit (400), um mindestens eines aus Folgendem durchzuführen: Vergleichen des ersten Operationsergebnisses (140) mit dem zweiten Operationsergebnis (140C), Vergleichen des gegenseitigen Prüfsummenergebnisses und des letzten Prüfsummenergebnisses, das den Variablen (120) entspricht, oder Vergleichen des gegenseitigen Prüfsummenergebnisses und des letzten Prüfsummenergebnisses, das den Zweierkomplement-Variablen (120C) entspricht; und
eine Ausgabeeinheit (500) zum Ausgeben des ersten Operationsergebnisses (140), des zweiten Operationsergebnisses (140C), oder einer Fehlermeldung (150) entsprechend einem Vergleichsergebnis des ersten Operationsergebnisses (140) und des zweiten Operationsergebnisses (140C), einem Vergleichsergebnis des gegenseitigen Prüfsummenergebnisses und des letzten Prüfsummenergebnisses, das den Variablen (120) entspricht, oder einem Vergleichsergebnis des gegenseitigen Prüfsummenergebnisses und des letzten Prüfsummenergebnisses, das den Zweierkomplement-Variablen (120C) entspricht,
wobei das Operationsprogramm (100) aus einer Speichereinheit (600) auf die Variablen (120) zugreift, und das Programm für inverse Zweierkomplement-Operation (100C) aus der Speichereinheit (600) auf die Zweierkomplement-Variablen (120C) zugreift.

2. Vorrichtung zur Fehlererkennung und -Korrektur nach Anspruch 1, wobei die Zweierkomplement-Variablen Zweierkomplemente der Variablen sind, wobei, wenn die Variablen vorzeichenbehaftete Zahlen sind, das Vorzeichen der Variablen dem Vorzeichen der Zweierkomplement-Variablen entgegengesetzt ist.

3. Vorrichtung zur Fehlererkennung und -Korrektur nach Anspruch 2, wobei das Operationsprogramm eine Vielzahl von Funktionen aufweist, und das Programm für inverse Zweierkomplement-Operation eine Vielzahl von inversen Operationsfunktionen aufweist, wobei die Programmausführungseinheit das Operationsprogramm entsprechend den Variablen und den Funktionen ausführt und das Programm für inverse Zweierkomplement-Operation entsprechend den Zweierkomplement-Variablen und den inversen Operationsfunktionen ausführt, wobei, wenn die Operanden der Funktionen in dem Operationsprogramm die Variablen sind, die inversen Operationsfunktionen identisch zu den Funktionen sind.

4. Vorrichtung zur Fehlererkennung und -Korrektur nach Anspruch 3, wobei in dem Operationsprogramm, wenn die Operanden der Funktionen eine Vielzahl von festen Werten sind, und die Funktionen ein Additionsoperator, ein Subtraktionsoperator, ein Imkrementoperator, ein Dekrementoperator, ein Größer-als-Operator oder Kleiner-als-Operator sind, die inversen Operationsfunktionen inverse Operationen der Funktionen sind.

5. Vorrichtung zur Fehlererkennung und -Korrektur nach Anspruch 1, wobei, wenn die Vergleichseinheit vergleich und bestimmt, dass das erste Operationsergebnis gleich dem Zweierkomplement des zweiten Operationsergebnisses ist, die Vergleichseinheit bestimmt, dass die Programmausführungseinheit das Operationsprogramm korrekt ausführt und das Programm für inverse Zweierkomplement-Operation korrekt ausführt, und die Ausgabeeinheit das erste Operationsergebnis ausgibt.

6. Vorrichtung zur Fehlererkennung und -Korrektur nach Anspruch 1, wobei, wenn die Vergleichseinheit vergleicht und bestimmt, dass das erste Operationsergebnis nicht gleich den Zweierkomplementen des zweiten Operationsergebnisses ist, die Vergleichseinheit bestimmt, dass die Programmausführungseinheit das Operationsprogramm falsch ausführt und/oder das Programm für inverse Zweierkomplement-Operation falsch ausführt.

7. Vorrichtung zur Fehlererkennung und -Korrektur nach Anspruch 6, wobei, wenn die Vergleichseinheit bestimmt, dass das Operationsprogramm und/oder das Programm für inverse Zweierkomplement-Operation falsch ausgeführt werden, die Vergleichseinheit das gegenseitige Prüfsummenergebnis und das letzte Prüfsummenergebnis vergleicht, das den Variablen entspricht, und das gegenseitige Prüfsummenergebnis und das letzte Prüfsummenergebnis vergleicht, das den Zweierkomplement-Variablen entspricht.

8. Vorrichtung zur Fehlererkennung und -Korrektur nach Anspruch 7, wobei, wenn das gegenseitige Prüfsummenergebnis gleich dem letzten Prüfsummenergebnis ist, das den Variablen entspricht, die Vergleichseinheit bestimmt, dass das Operationsprogramm korrekt ausgeführt wird, und die Ausgabeeinheit das erste Operationsergebnis ausgibt, wobei, wenn das gegenseitige Prüfsummenergebnis gleich dem letzten Prüfsummenergebnis ist, das den Zweierkomplement-Variablen entspricht, die Vergleichseinheit bestimmt, dass das Programm für inverse Zweierkomplement-Operation korrekt ausgeführt wird, und die Ausgabeeinheit das zweite Operationsergebnis ausgibt.

9. Vorrichtung zur Fehlererkennung und -Korrektur nach Anspruch 7, wobei, wenn das gegenseitige Prüfsummenergebnis nicht gleich dem letzten Prüfsummenergebnis ist, das den Variablen entspricht, und wenn das gegenseitige Prüfsummenergebnis nicht gleich dem letzten Prüfsummenergebnis ist, das den Zweierkomplement-Variablen entspricht, die Vergleichseinheit bestimmt, dass das Operationsprogramm falsch ausgeführt wird und das Programm für inverse Zweierkomplement-Operation falsch ausgeführt wird, und die Ausgabeeinheit die Fehlermeldung ausgibt.

10. Verfahren zur Fehlererkennung und -Korrektur zum Erkennen und/oder Korrigieren eines Fehlers bzw. von Fehlern eines Operationsprogramms (100), das umfasst: Umwandeln des Operationsprogramms (100) in ein Programm für inverse Zweierkomplement-Operation (100C), Umwandeln einer Vielzahl von Variablen (120) des Operationsprogramms (100) in eine Vielzahl von Zweierkomplement-Variablen (120C), Ausführen des Operationsprogramms (100), um ein erstes Operationsergebnis (140) entsprechend den Variablen (120) zu erhalten, Ausführen des Programms für inverse Zweierkomplement-Operation (100C), um eines zweites Operationsergebnis (140C) entsprechend den Zweierkomplement-Variablen (120C) zu erhalten, wobei das Verfahren zur Fehlererkennung und -Korrektur ferner umfasst:
Berechnen eines gegenseitigen Prüfsummenergebnisses, das sämtlichen Variablen (120) entspricht, entsprechend dem Operationsprogramm (100);
Berechnen eines letzten Prüfsummenergebnisses in einem Operationsprozess, das den Variablen (120) entspricht;
Berechnen eines gegenseitigen Prüfsummenergebnisses, das sämtlichen Zweierkomplement-Variablen (120C) entspricht, entsprechend dem Programm für inverse Zweierkomplement-Operation (100C);
Berechnen eines letzten Prüfsummenergebnisses in dem Operationsprozess, das den Zweierkomplement-Variablen (120C) entspricht;
Vergleichen des ersten Operationsergebnisses (140) mit dem zweiten Operationsergebnis (140C), Vergleichen des gegenseitigen Prüfsummenergebnisses und des letzten Prüfsummenergebnisses, das den Variablen (120) entspricht, oder Vergleichen des gegenseitigen Prüfsummenergebnisses und des letzten Prüfsummenergebnisses, das den Zweierkomplement-Variablen (120C) entspricht; und
Ausgeben des ersten Operationsergebnisses (140), des zweiten Operationsergebnisses (140C), oder einer Fehlermeldung (150) entsprechend einem Vergleichsergebnis des ersten Operationsergebnisses (140) und des zweiten Operationsergebnisses (140C), eines Vergleichsergebnisses des gegenseitigen Prüfsummenergebnisses und des letzten Prüfsummenergebnisses, das den Variablen (120) entspricht, oder eines Vergleichsergebnisses des gegenseitigen Prüfsummenergebnisses und des letzten Prüfsummenergebnisses, das den Zweierkomplement-Variablen (120C) entspricht,
wobei die Variablen (120) von dem Operationsprogramm (100) aus einer Speichereinheit (600) abgerufen werden, und die Zweierkomplement-Variablen (120C) von dem Programm für inverse Zweierkomplement-Operation (100C) aus der Speichereinheit (600) abgerufen werden.

11. Verfahren zur Fehlererkennung und -Korrektur nach Anspruch 10, wobei die Zweierkomplement-Variablen Zweierkomplemente der Variablen sind; wobei, wenn die Variablen vorzeichenbehaftete Zahlen sind, das Vorzeichen der Variablen dem Vorzeichen der Zweierkomplement-Variablen entgegengesetzt ist.

12. Verfahren zur Fehlererkennung und -Korrektur nach Anspruch 11, wobei das Operationsprogramm eine Vielzahl von Funktionen aufweist, und das Programm für inverse Zweierkomplement-Operation eine Vielzahl von inversen Operationsfunktionen aufweist, Ausführen des Operationsprogramms entsprechend den Variablen und den Funktionen, und Ausführen des Programms für inversen Zweierkomplement-Operation entsprechend den Zweierkomplement-Variablen und den inversen Operationsfunktionen, wobei, wenn die Operanden der Funktionen in dem Operationsprogramm die Variablen sind, die inversen Operationsfunktionen identisch zu den Funktionen sind.

13. Verfahren zur Fehlererkennung und -Korrektur nach Anspruch 12, wobei in dem Operationsprogramm, wenn die Operanden der Funktionen eine Vielzahl von festen Werten sind, und die Funktionen ein Additionsoperator, ein Subtraktionsoperator, ein Imkrementoperator, ein Dekrementoperator, ein Grö-βer-als-Operator oder Kleiner-als-Operator sind, die inversen Operationsfunktionen inverse Operationen der Funktionen sind.

14. Verfahren zur Fehlererkennung und -Korrektur nach Anspruch 10, wobei, wenn das erste Operationsergebnis gleich dem Zweierkomplement des zweiten Operationsergebnisses ist, Bestimmen, dass das Operationsprogramm korrekt ausgeführt wird und das Programm für inverse Zweierkomplement-Operation korrekt ausgeführt wird, und Ausgeben des ersten Operationsergebnisses.

15. Verfahren zur Fehlererkennung und -Korrektur nach Anspruch 10, wobei, wenn das Operationsergebnis nicht gleich den Zweierkomplementen des zweiten Operationsergebnisses ist, Bestimmen, dass das Operationsprogramm falsch ausgeführt wird und/oder das Programm für inverse Zweierkomplement-Operation falsch ausgeführt wird.

16. Verfahren zur Fehlererkennung und -Korrektur nach Anspruch 15, wobei, wenn bestimmt wird, dass das Operationsprogramm und/oder das Programm für inverse Zweierkomplement-Operation falsch ausgeführt werden, Vergleichen des gegenseitigen Prüfsummenergebnisses und des letzten Prüfsummenergebnisses, das den Variablen entspricht, und Vergleichen des gegenseitigen Prüfsummenergebnisses und des letzten Prüfsummenergebnisses, das den Zweierkomplement-Variablen entspricht.

17. Verfahren zur Fehlererkennung und -Korrektur nach Anspruch 16, wobei:
wenn das gegenseitige Prüfsummenergebnis gleich dem letzten Prüfsummenergebnis ist, das den Variablen entspricht, Bestimmen, dass das Operationsprogramm korrekt ausgeführt wird, und Ausgeben des ersten Operationsergebnisses; und
wenn das gegenseitige Prüfsummenergebnis gleich dem letzten Prüfsummenergebnis ist, das den Zweierkomplement-Variablen entspricht, Bestimmen, dass das Programm für inverse Zweierkomplement-Operation korrekt ausgeführt wird, und Ausgeben des zweiten Operationsergebnisses.

18. Verfahren zur Fehlererkennung und -Korrektur nach Anspruch 16, wobei, wenn das gegenseitige Prüfsummenergebnis nicht gleich dem letzten Prüfsummenergebnis ist, das den Variablen entspricht, und wenn das gegenseitige Prüfsummenergebnis nicht gleich dem letzten Prüfsummenergebnis ist, das den Zweierkomplement-Variablen entspricht, Bestimmen, dass das Operationsprogramm falsch ausgeführt wird und das Programm für inverse Zweierkomplement-Operation falsch ausgeführt wird, und Ausgeben der Fehlermeldung.

## Revendications

1. Dispositif de détection et de correction d'erreurs (1000), permettant de détecter et/ou de corriger une ou des erreur(s) d'un programme d'opération (100), comprenant : une unité de conversion (200) permettant de convertir le programme d'opération (100) en un programme d'opération inverse de complément à deux (100C) et de convertir une pluralité de variables (120) du programme d'opération (100) en une pluralité de variables de complément à deux (120C), et une unité d'exécution de programme (250) permettant d'exécuter le programme d'opération (100) pour obtenir un premier résultat d'opération (140) selon les variables (120) et d'exécuter le programme d'opération inverse de complément à deux (100C) pour obtenir un second résultat d'opération (140C) selon les variables de complément à deux (120C), le dispositif de détection et de correction d'erreurs (1000) comprenant en outre :
une unité d'opération de somme de contrôle (300), permettant de mettre en oeuvre ce qui suit : le calcul d'une résultat de somme de contrôle mutuelle correspondant à la totalité des variables (120) selon le programme d'opération (100), le calcul d'un dernier résultat de somme de contrôle dans un processus opérationnel correspondant aux variables (120), le calcul d'un résultat de somme de contrôle mutuelle correspondant à la totalité des variables de complément à deux (120C) selon le programme d'opération inverse de complément à deux (100C) et le calcul d'un dernier résultat de somme de contrôle dans le processus opérationnel correspondant aux variables de complément à deux (120C) ;
une unité de comparaison (400), permettant de mettre en oeuvre au moins l'une de ce qui suit : la comparaison du premier résultat d'opération (140) au second résultat d'opération (140C), la comparaison du résultat de somme de contrôle mutuelle et du dernier résultat de somme de contrôle correspondant aux variables (120), ou la comparaison du résultat de somme de contrôle mutuelle et du dernier résultat de somme de contrôle correspondant aux variables de complément à deux (120C) ; et
une unité de sortie (500), permettant de délivrer en sortie le premier résultat d'opération (140), le second résultat d'opération (140C) ou un message d'erreur (150) selon un résultat de comparaison du premier résultat d'opération (140) et du second résultat d'opération (140C), un résultat de comparaison du résultat de somme de contrôle mutuelle et du dernier résultat de somme de contrôle correspondant aux variables (120), ou un résultat de comparaison du résultat de somme de contrôle mutuelle et du dernier résultat de somme de contrôle correspondant aux variables de complément à deux (120C),
dans lequel le programme d'opération (100) accède aux variables (120) à partir d'une unité de stockage (600), et le programme d'opération inverse de complément à deux (100C) accède aux variables de complément à deux (120C) à partir de l'unité de stockage (600).

2. Dispositif de détection et de correction d'erreurs selon la revendication 1, dans lequel les variables de complément à deux sont des compléments à deux des variables, si les variables sont des nombres avec signe, le signe des variables est opposé à celui des variables de complément à deux.

3. Dispositif de détection et de correction d'erreurs selon la revendication 2, dans lequel le programme d'opération comporte une pluralité de fonctions, et le programme d'opération inverse de complément à deux comporte une pluralité de fonctions d'opération inverse, l'unité d'exécution de programme exécute le programme d'opération selon les variables et les fonctions et exécute le programme d'opération inverse de complément à deux selon les variables de complément à deux et les fonctions d'opération inverse, si les opérandes des fonctions dans le programme d'opération sont les variables, les fonctions d'opération inverse sont identiques aux fonctions.

4. Dispositif de détection et de correction d'erreurs selon la revendication 3, dans lequel dans le programme d'opération, si les opérandes des fonctions sont une pluralité de valeurs fixes, et que les fonctions sont un opérateur d'addition, un opérateur de soustraction, un opérateur d'incrémentation, un opérateur de décrémentation, opérateur supérieur à ou un opérateur inférieur à, les fonctions d'opération inverse sont des opérations inverses des fonctions.

5. Dispositif de détection et de correction d'erreurs selon la revendication 1, dans lequel si l'unité de comparaison compare et détermine que le premier résultat d'opération est égal au complément à deux du second résultat d'opération, l'unité de comparaison détermine que l'unité d'exécution de programme exécute correctement le programme d'opération et exécute correctement le programme d'opération inverse de complément à deux, et l'unité de sortie délivre en sortie le premier résultat d'opération.

6. Dispositif de détection et de correction d'erreurs selon la revendication 1, dans lequel si l'unité de comparaison compare et détermine que le premier résultat d'opération n'est pas égal aux compléments à deux du second résultat d'opération, l'unité de comparaison détermine que l'unité d'exécution de programme exécute de manière erronée le programme d'opération et/ou exécute de manière erronée le programme d'opération inverse de complément à deux.

7. Dispositif de détection et de correction d'erreurs selon la revendication 6, dans lequel si l'unité de comparaison détermine que le programme d'opération et/ou le programme d'opération inverse de complément à deux sont exécutés de manière erronée, l'unité de comparaison compare le résultat de somme de contrôle mutuelle et le dernier résultat de somme de contrôle correspondant aux variables et compare le résultat de somme de contrôle mutuelle et le dernier résultat de somme de contrôle correspondant aux variables de complément à deux.

8. Dispositif de détection et de correction d'erreurs selon la revendication 7, dans lequel si le résultat de somme de contrôle mutuelle est égal au dernier résultat de somme de contrôle correspondant aux variables, l'unité de comparaison détermine que le programme d'opération est exécuté correctement, et l'unité de sortie délivre en sortie le premier résultat d'opération, si le résultat de somme de contrôle mutuelle est égal au dernier résultat de somme de contrôle correspondant aux variables de complément à deux, l'unité de comparaison détermine que le programme d'opération inverse de complément à deux est exécuté correctement, et l'unité de sortie délivre en sortie le second résultat d'opération.

9. Dispositif de détection et de correction d'erreurs selon la revendication 7, dans lequel si le résultat de somme de contrôle mutuelle n'est pas égal au dernier résultat de somme de contrôle correspondant aux variables, et si le résultat de somme de contrôle mutuelle n'est pas égal au dernier résultat de somme de contrôle correspondant aux variables de complément à deux, l'unité de comparaison détermine que le programme d'opération est exécuté de manière erronée et que le programme d'opération inverse de complément à deux est exécuté de manière erronée, et l'unité de sortie délivre en sortie le message d'erreur.

10. Procédé de détection et de correction d'erreurs, permettant de détecter et/ou de corriger une ou des erreur(s) d'un programme d'opération (100), comprenant : la conversion du programme d'opération (100) en un programme d'opération inverse de complément à deux(100C), la conversion d'une pluralité de variables (120) du programme d'opération (100) en une pluralité de variables de complément à deux(120C), l'exécution du programme d'opération (100) pour obtenir un premier résultat d'opération (140) selon les variables (120), l'exécution du programme d'opération inverse de complément à deux (100C) pour obtenir un second résultat d'opération (140C) selon les variables de complément à deux (120C), le procédé de détection et de correction d'erreurs comprenant en outre :
le calcul d'un résultat de somme de contrôle mutuelle correspondant à la totalité des variables (120) selon le programme d'opération (100) ;
le calcul d'un dernier résultat de somme de contrôle dans un processus opérationnel correspondant aux variables (120) ;
le calcul d'un résultat de somme de contrôle mutuelle correspondant à la totalité des variables de complément à deux (120C) selon le programme d'opération inverse de complément à deux (100C) ;
le calcul d'un dernier résultat de somme de contrôle dans le processus opérationnel correspondant aux variables de complément à deux (120C) ;
la comparaison du premier résultat d'opération (140) au second résultat d'opération (140C), la comparaison du résultat de somme de contrôle mutuelle et du dernier résultat de somme de contrôle correspondant aux variables (120), ou la comparaison du résultat de somme de contrôle mutuelle et du dernier résultat de somme de contrôle correspondant aux variables de complément à deux (120C) ; et
la sortie du premier résultat d'opération (140), du second résultat d'opération (140C) ou d'un message d'erreur (150) selon un résultat de comparaison du premier résultat d'opération (140) et du second résultat d'opération (140C), d'un résultat de comparaison du résultat de somme de contrôle mutuelle et du dernier résultat de somme de contrôle correspondant aux variables (120), ou d'un résultat de comparaison du résultat de somme de contrôle mutuelle et du dernier résultat de somme de contrôle correspondant aux variables de complément à deux (120C).
dans lequel les variables (120) sont accessibles à partir d'une unité de stockage (600) par le programme d'opération (100), et les variables de complément à deux (120C) sont accessibles à partir de l'unité de stockage (600) par le programme d'opération inverse de complément à deux (100C).

11. Procédé de détection et de correction d'erreurs selon la revendication 10, dans lequel les variables de complément à deux sont des compléments à deux des variables ; si les variables sont des nombres avec signe, le signe des variables est opposé à celui des variables de complément à deux.

12. Procédé de détection et de correction d'erreurs selon la revendication 11, dans lequel le programme d'opération comporte une pluralité de fonctions, et le programme d'opération inverse de complément à deux comporte une pluralité de fonctions d'opération inverse, exécutant le programme d'opération selon les variables et les fonctions et exécutant le programme d'opération inverse de complément à deux selon les variables de complément à deux et les fonctions d'opération inverse, si les opérandes des fonctions dans le programme d'opération sont les variables, les fonctions d'opération inverse sont identiques aux fonctions.

13. Procédé de détection et de correction d'erreurs selon la revendication 12, dans lequel dans le programme d'opération, si les opérandes des fonctions sont une pluralité de valeurs fixes, et que les fonctions sont un opérateur d'addition, un opérateur de soustraction, un opérateur d'incrémentation, un opérateur de décrémentation, opérateur supérieur à ou un opérateur inférieur à, les fonctions d'opération inverse sont des opérations inverses des fonctions.

14. Procédé de détection et de correction d'erreurs selon la revendication 10, si le premier résultat d'opération est égal au complément à deux du second résultat d'opération, on détermine que le programme d'opération est correctement exécuté et que le programme d'opération inverse de complément à deux est correctement exécuté, et on délivre en sortie le premier résultat d'opération.

15. Procédé de détection et de correction d'erreurs selon la revendication 10, si le premier résultat d'opération n'est pas égal au complément à deux du second résultat d'opération, on détermine que le programme d'opération est exécuté de manière erronée et/ou que le programme d'opération inverse de complément à deux est exécuté de manière erronée.

16. Procédé de détection et de correction d'erreurs selon la revendication 15, dans lequel si l'on détermine que le programme d'opération et/ou le programme d'opération inverse de complément à deux sont exécutés de manière erronée, on compare le résultat de somme de contrôle mutuelle et le dernier résultat de somme de contrôle correspondant aux variables et on compare le résultat de somme de contrôle mutuelle et le dernier résultat de somme de contrôle correspondant aux variables de complément à deux.

17. Procédé de détection et de correction d'erreurs selon la revendication 16, dans lequel :
si le résultat de somme de contrôle mutuelle est égal au dernier résultat de somme de contrôle correspondant aux variables, on détermine que le programme d'opération est exécuté correctement, et on délivre en sortie le premier résultat d'opération ; et
si le résultat de somme de contrôle mutuelle est égal au dernier résultat de somme de contrôle correspondant aux variables de complément à deux, on détermine que le programme d'opération inverse de complément à deux est exécuté correctement, et on délivre en sortie le second résultat d'opération.

18. Procédé de détection et de correction d'erreurs selon la revendication 16, dans lequel si le résultat de somme de contrôle mutuelle n'est pas égal au dernier résultat de somme de contrôle correspondant aux variables, et si le résultat de somme de contrôle mutuelle n'est pas égal au dernier résultat de somme de contrôle correspondant aux variables de complément à deux, on détermine que le programme d'opération est exécuté de manière erronée et que le programme d'opération inverse de complément à deux est exécuté de manière erronée, et on délivre en sortie le message d'erreur.
